(19)

Europäisches
Patentamt
European
Patent Office
Office européen
des brevets

(11) **EP 4 450 300 A1**

(12) **EUROPEAN PATENT APPLICATION**
published in accordance with Art. 153(4) EPC

(43) Date of publication:
**23.10.2024 Bulletin 2024/43**

(21) Application number: **22907375.4**

(22) Date of filing: **09.12.2022**

(51) International Patent Classification (IPC):
**B60C 11/00** (2006.01)     **B60C 1/00** (2006.01)
**B60C 9/00** (2006.01)     **B60C 9/08** (2006.01)
**B60C 9/22** (2006.01)     **C08K 3/04** (2006.01)
**C08K 3/36** (2006.01)     **C08L 7/00** (2006.01)
**C08L 9/00** (2006.01)     **C08L 21/00** (2006.01)

(52) Cooperative Patent Classification (CPC):
**B60C 1/00; B60C 9/00; B60C 9/08; B60C 9/22;**
**B60C 11/00; C08K 3/04; C08K 3/36; C08L 7/00;**
**C08L 9/00; C08L 21/00;** Y02T 10/86

(86) International application number:
**PCT/JP2022/045422**

(87) International publication number:
**WO 2023/112848 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.12.2021   JP 2021204804**

(71) Applicant: **The Yokohama Rubber Co., Ltd.
Hiratsuka-shi, Kanagawa 254-8601 (JP)**

(72) Inventors:
• **OZAKI Makoto**
  **Hiratsuka-shi, Kanagawa 254-8601 (JP)**
• **ISHII Hidekazu**
  **Hiratsuka-shi, Kanagawa 254-8601 (JP)**
• **SUZUKI Sakiko**
  **Hiratsuka-shi, Kanagawa 254-8601 (JP)**

(74) Representative: **Dilg, Haeusler, Schindelmann
Patentanwaltsgesellschaft mbH
Leonrodstraße 58
80636 München (DE)**

(54) **PNEUMATIC TIRE**

(57)    Provided is a pneumatic tire that can provide improved high-speed steering stability, low rolling resistance, and high-speed durability and provide these performances in a highly compatible manner in reducing road noise by using PET fiber cords for a belt cover layer. In a pneumatic tire including a belt reinforcing layer (8) and a tread portion (1) made up of a cap tread layer (11) and an under tread layer (12), a cover cord constituting the belt reinforcing layer (8) is made of a polyethylene terephthalate fiber cord having an elongation ratio under a load of 2.0 cN/dtex at 100°C ranging from 2.0% to 4.0%, the under tread layer (11) is made up of rubber that is made of a rubber composition blending, per 100 parts by mass of rubber component, 35 parts by mass to 60 parts by mass of carbon black having a CTAB adsorption specific surface area of less than 70 $m^2$/g and 3 parts by mass to 30 parts by mass of silica having the CTAB adsorption specific surface area of less than 180 $m^2$/g and has a hardness at 20°C ranging from 60 to 65, a tensile stress at 100% elongation at 100°C ranging from 2.0 MPa to 4.0 MPa, and a product of a tensile strength at 100°C and an elongation at break at 100°C of 2000 or more.

FIG. 1

EP 4 450 300 A1

**Description**

Technical Field

The present invention relates to a pneumatic tire using a polyethylene terephthalate (PET) fiber cord for a belt cover layer.

Background Art

Pneumatic tires for a passenger vehicle or a small truck typically include a carcass layer mounted between a pair of bead portions, a plurality of belt layers disposed on an outer circumferential side of the carcass layer in a tread portion, and a belt cover layer that includes a plurality of organic fiber cords spirally wound along a tire circumferential direction on an outer circumferential side of the belt layer. This structure causes the belt cover layer to contribute to the improvement of high-speed durability and also contribute to the reduction of mid-range frequency road noise.

Although a main organic fiber cord to be used for the belt cover layer is a nylon fiber cord in the related art, it has been proposed to use a polyethylene terephthalate fiber cord (hereinafter referred to as a PET fiber cord) that is highly elastic and inexpensive compared to the nylon fiber cord (see, for example, Patent Document 1). Unfortunately, the PET fiber cord has high elasticity and is less likely to elongate compared to the known nylon fiber cord. This increases rigidity of the tread portion and makes a balance between the rigidity of the tread portion and a sidewall portion worse, thus causing steering stability during high-speed travel to tend to be degraded. Additionally, the PET fiber cord tends to generate heat more easily than the known nylon fiber cord, and reduction in rolling resistance and improvement in high-speed durability are difficult. Thus, in reducing road noise using the PET fiber cord, measures to improve high-speed steering stability, low rolling resistance, and high-speed durability are awaited.

Citation List

Patent Literature

Patent Document 1: JP 2001-63312 A

Summary of Invention

Technical Problem

An object of the present invention is to provide a pneumatic tire that can provide improved high-speed steering stability, low rolling resistance, and high-speed durability and provide these performances in a highly compatible manner in reducing road noise by using PET fiber cords for a belt cover layer.

Solution to Problem

To achieve the object described above, a pneumatic tire according to an embodiment of the present invention may include a tread portion extending in a tire circumferential direction and having an annular shape, a pair of sidewall portions respectively disposed on both sides of the tread portion, a pair of bead portions each disposed on an inner side of the pair of sidewall portions in a tire radial direction, one carcass layer mounted between the pair of bead portions, a plurality of belt layers disposed on an outer circumferential side of the carcass layer in the tread portion, and a belt reinforcing layer disposed on an outer circumferential side of the belt layer. The tread portion may be made up of two layers, an under tread layer disposed on an outer circumferential side of the belt reinforcing layer and a cap tread layer disposed on an outer circumferential side of the under tread layer and constituting a road contact surface of the tread portion. A cover cord constituting the belt reinforcing layer may be made of a polyethylene terephthalate fiber cord having an elongation ratio under a load of 2.0 cN/dtex at 100°C ranging from 2.0% to 4.0%. An under tread rubber composition constituting the under tread layer may have a hardness at 20°C ranging from 60 to 65, a tensile stress at 100% elongation at 100°C (M100) ranging from 2.0 MPa to 4.0 MPa, and a product (TB × EB) of a tensile strength TB (unit: MPa) at 100°C and an elongation at break EB (unit: %) at 100°C of 2000 or more. The under tread rubber composition may blend, per 100 parts by mass of rubber component, 35 parts by mass to 60 parts by mass of carbon black having a CTAB adsorption specific surface area of less than 70 $m^2$/g and 3 parts by mass to 30 parts by mass of silica having the CTAB adsorption specific surface area of less than 180 $m^2$/g.

Advantageous Effects of Invention

As a result of diligent research on a pneumatic tire including a belt reinforcing layer made up of a cover code made of a PET fiber cord, the present inventor has found that fatigue resistance and hoop effect of a cord suitable for a belt cover layer can be obtained by making dip treatment of the PET fiber cord proper and setting the elongation ratio under a load of 2.0 cN/dtex at 100°C to a predetermined range and has achieved the present invention. That is, an embodiment of the present invention can effectively reduce road noise while satisfactorily maintaining durability of the pneumatic tire by using, as an organic fiber cord constituting the belt cover layer, the PET fiber cord whose elongation ratio under the load of 2.0 cN/dtex at 100°C ranges from 2.0% to 4.0%. Furthermore, in using such a belt cover layer, the under tread layer is made up of the under tread rubber composition having the above-described physical properties and compound, good high-speed steering stability, and thus low rolling resistance, and high-speed durability can be ensured. In particular, since the hardness and the tensile stress (M100) of the under tread are set in the above-described ranges, high-speed durability and high-speed steering stability can be improved. Setting the product (TB $\times$ EB) of the tensile strength TB and the elongation at break EB as described above also allows improvement in high-speed durability to be expected. Such physical properties can be reliably and efficiently ensured by the above-described carbon black and silica. The cooperation of these can provide reduction in road noise and improvement in high-speed steering stability, low rolling resistance, and high-speed durability in a highly compatible manner and in a well-balanced manner.

The "elongation ratio under a load of 2.0 cN/dtex at 100°C" of the cover cord is an elongation ratio (%) of sample cords (cover cords) measured under a load of 2.0 cN/dtex measured by conducting a tensile test in accordance with JIS L1017 "Test methods for chemical fiber tire cords" under conditions of a grip interval being 250 mm and a tensile speed being 300 $\pm$ 20 mm/minute.

In the under tread rubber composition, "hardness" is a hardness of a rubber composition measured in accordance with JIS K 6253 and by using a Type A durometer at a temperature of 20°C. The "tensile stress at 100% elongation at 100°C (M100)" is a value measured in accordance with JIS K6251, by using a No. 3 dumbbell test piece, and under conditions of a tensile speed of 500 mm/minute and a temperature of 100°C. The "tensile strength TB at 100°C" is a value (unit: MPa) measured in accordance with JIS K6251 and under a condition of a temperature of 100°C. The "elongation at break EB at 100°C" is a value (unit: %) measured in accordance with JIS K6251 and under a condition of a temperature of 100°C.

In an embodiment of the present invention, the rubber component preferably contains 60 mass% or more of isoprene-based rubber and 10 mass% to 40 mass% of butadiene rubber, and the butadiene rubber preferably has 97% or more of cis-1,4 bond content, 42 or more of Mooney viscosity ($ML_{1+4}$) at 100°C, and a ratio (T-cp)/($ML_{1+4}$) of 5 mass% toluene solution viscosity (T-cp) (unit: cps) at 25°C to the Mooney viscosity is preferably from 2.0 to 3.0. This makes the physical properties of the under tread rubber composition satisfactory, which is advantageous for improving high-speed steering stability, low rolling resistance, and high-speed durability.

In an embodiment of the present invention, an in-tire cord tension of the cover cord is preferably 0.9 cN/dtex or more. This is advantageous in suppressing heat generation and improving the durability of the tire. The "in-tire cord tension" is a value obtained by exposing the belt reinforcing layer from the tire, peeling off the cover cord by a predetermined length range of the belt reinforcing layer, measuring the length after the collection, obtaining an amount of shrinkage to the length before the collection (an average value of five fiber cords located at a center portion of the belt layer on an outermost circumferential side), obtaining a load corresponding to the amount of shrinkage (%) from an S-S curve, and performing conversion into a value per dtex.

In an embodiment of the present invention, preferably, the carcass cord constituting the carcass layer is made of the organic fiber cord having the elongation ratio under a load of 1.5 cN/dtex on an inner circumferential side of the belt layer of 5.5% to 8.5% and an elongation at break of 20% to 30%, and a product A = D $\times$ Ec of a fineness based on corrected mass D per carcass cord (unit: dtex/cord) and an insertion count Ec (unit: cord count/50 mm) of the carcass cord per 50 mm in a direction orthogonal to an extension direction of the carcass cord satisfies a relationship 1.8 $\times$ 10$^5$ dtex/50 mm to 3.0 $\times$ 10$^5$ dtex/50 mm. Accordingly, this is advantageous for improving high-speed durability and high-speed steering stability.

The "elongation at break" of the carcass cord is an elongation ratio at break (%) of a sample cord (a carcass cord) measured by conducting the tensile test in accordance with JIS L1017 "Test methods for chemical fiber tire cords" under conditions of the grip interval being 250 mm and the tensile speed being 300 $\pm$ 20 mm/minute. The "elongation ratio under a load of 1.5 cN/dtex on an inner circumferential side of the belt layer" is an elongation ratio (%) of sample cords (carcass cords taken out from the inner circumferential side of the belt layer) measured under a load of 1.5 cN/dtex measured by conducting the tensile test in accordance with JIS L1017 "Test methods for chemical fiber tire cords" under conditions of the grip interval being 250 mm and the tensile speed being 300 $\pm$ 20 mm/minute.

Brief Description of Drawings

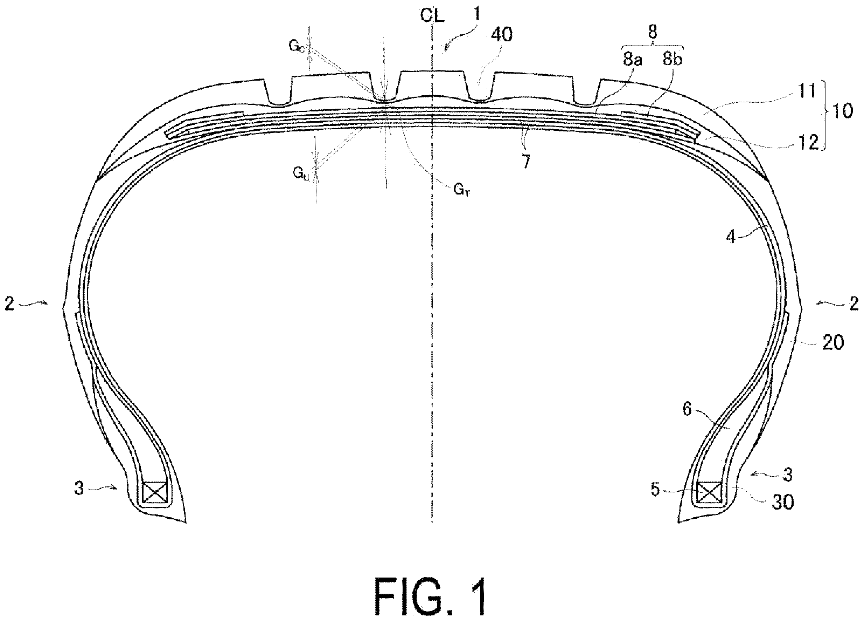

FIG. 1 is a meridian cross-sectional view illustrating a pneumatic tire according to an embodiment of the present invention.

Description of Embodiments

Configurations of embodiments of the present invention will be described in detail below with reference to the accompanying drawings.

As illustrated in FIG. 1, a pneumatic tire according to an embodiment of the present invention includes a tread portion 1, a pair of sidewall portions 2 respectively disposed on both sides of the tread portion 1, and a pair of bead portions 3 each disposed on an inner side of the pair of sidewall portions 2 in a tire radial direction. "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and having an annular shape. This forms a toroidal basic structure of the pneumatic tire. Although the description using FIG. 1 is basically based on the illustrated meridian cross-sectional shape, all of the tire components extend in the tire circumferential direction and form the annular shape.

At least one carcass layer 4 including a plurality of reinforcing cords (hereinafter referred to as carcass cords) extending in the tire radial direction is mounted between the pair of bead portions 3 on the left and right. A bead core 5 is embedded within each of the bead portions, and a bead filler 6 having an approximately triangular cross-sectional shape is disposed on an outer periphery of the bead core 5. The carcass layer 4 is folded back around the bead core 5 from an inner side to an outer side in the tire width direction. Accordingly, the bead core 5 and the bead filler 6 are wrapped by a body portion (a portion extending from the tread portion 1 through each of the sidewall portions 2 to each of the bead portions 3) and a folded back portion (a portion folded back around the bead core 5 of each bead portion 3 to extend toward each sidewall portion 2 side) of the carcass layer 4.

A plurality of belt layers 7 (in the illustrated example, two layers) are embedded on an outer circumferential side of the carcass layer 4 in the tread portion 1. Each of the belt layers 7 includes a plurality of reinforcing cords (hereinafter referred to as belt cords) inclining with respect to the tire circumferential direction, and the belt cords are disposed so as to intersect with one another between the layers. In the belt layers 7, an inclination angle of the belt cord with respect to the tire circumferential direction is set within a range, for example, from 10° to 40°.

In addition, a belt reinforcing layer 8 is provided on an outer circumferential side of the belt layers 7 for the purpose of improvement of high-speed durability and reduction of road noise. The belt reinforcing layer 8 includes a reinforcing cord (hereinafter referred to as a cover cord) oriented in the tire circumferential direction. As the cover cord, a polyethylene terephthalate fiber cord (a PET fiber cord) is used. In the belt reinforcing layer 8, the angle of the cover cord with respect to the tire circumferential direction is set to, for example, from 0° to 5°. As the belt reinforcing layer 8, a full cover layer 8a that covers the entire region of the belt layers 7 in the width direction, a pair of edge cover layers 8b that locally cover both end portions of the belt layers 7 in the tire width direction, or a combination thereof can be provided (in the example illustrated, both of the full cover layer 8a and the edge cover layers 8b are provided). Preferably, the belt reinforcing layer 8 is configured such that a strip material made of at least one cover cord arranged and covered with coating rubber is wound spirally in the tire circumferential direction. In particular, the belt reinforcing layer 8 desirably has a jointless structure.

In the tread portion 1, a tread rubber layer 10 is disposed on the outer circumferential side of the above-described tire components (the carcass layer 4, the belt layer 7, and the belt reinforcing layer 8). In particular, in an embodiment of the present invention, the tread rubber layer 10 has a structure in which two types of rubbers having different physical properties (a cap tread layer 11 exposed to a road contact surface and an under tread layer 12 disposed on an inner circumferential side of the cap tread layer 11) are stacked in the tire radial direction. A side rubber layer 20 is disposed on the outer circumferential side (the outer side in the tire width direction) of the carcass layer 4 in the sidewall portion 2, and a rim cushion rubber layer 30 is disposed on the outer circumferential side (the outer side in the tire width direction) of the carcass layer 4 in the bead portion 3.

The present invention mainly relates to the cords (the carcass cord and the cover cords) constituting the respective layers of the carcass layer 4 and the belt reinforcing layer 8 and a tread rubber layer 11 (especially the under tread layer 12) described above, and therefore the other basic structure of the tire are not limited to those described above.

According to an embodiment of the present invention, the carcass cord constituting the carcass layer 4 are formed of organic fiber cords obtained by intertwining organic fiber filament bundles. In the carcass cord used in the present invention, the elongation ratio under a load of 1.5 cN/dtex and the elongation at break on the inner circumferential side of the belt layer 7 are preferably set in respective specific ranges. To configure the carcass layer 4, the product A = D × Ec of the fineness based on corrected mass D per carcass cord (unit: dtex/cord) and the insertion count Ec (unit: cord count/50 mm) of the carcass cord per 50 mm in the direction orthogonal to the extension direction of the carcass cord is preferably set in a specific range described later. Specifically, the elongation ratio under a load of 1.5 cN/dtex on the inner circumferential side of the belt layer 7 of the carcass cord of an embodiment of the present invention preferably ranges from 5.5% to 8.5% and more preferably from 6.0% to 7.0%. Furthermore, the elongation at break of the carcass cord of an embodiment of the present invention preferably ranges from 20% to 30% and more preferably from 22% to 28%. Furthermore, the above-described product A = D × Ec is preferably set to $1.8 \times 10^5$ dtex/50 mm to $3.0 \times 10^5$ dtex/50 mm and more preferably $2.2 \times 10^5$ dtex/50 mm to $2.7 \times 10^5$ dtex/50 mm. When the carcass cord (the carcass layer 4) having such physical properties is used, high-speed durability and high-speed steering stability can be provided in a highly compatible manner and in a well-balanced manner as described below.

The elongation ratio under a load of 1.5 cN/dtex on the inner circumferential side of the belt layer 7 of the carcass cord set in the above-described range moderately lowers the rigidity of the carcass layer 4 in a region overlapping with the belt layers 7. This allows sufficiently ensuring a ground contact area during travel, and therefore steering stability can be satisfactory. When the elongation ratio under a load of 1.5 cN/dtex on the inner circumferential side of the belt layer 7 of the carcass cord is less than 5.5%, the fatigue resistance of the carcass cord deteriorates and high-speed durability decreases. When the elongation ratio under a load of 1.5 cN/dtex on the inner circumferential side of the belt layer 7 of the carcass cord is more than 8.5%, rising during high-speed travel increases and high-speed durability decreases.

By the elongation at break of the carcass cord being set in the range described above, the rigidity of the carcass cord can be appropriately ensured, and steering stability can be satisfactorily achieved. When the elongation at break of the carcass cord is less than 20%, the effect of improving steering stability cannot be sufficiently obtained. When the elongation at break of the carcass cord is more than 30%, intermediate elongation tends to be increased, the rigidity is thus reduced, and the steering stability possibly decreases.

Since the product A = D × Ec described above is equivalent to the fineness of the carcass cord per unit width in the carcass layer 4, when it satisfies the range described above, high-speed durability and high-speed steering stability can be ensured in a well-balanced manner. When the product A is less than $1.8 \times 10^5$ dtex/50 mm, an amount of yarn of the carcass cords in the carcass layer 4 cannot be sufficiently ensured, and high-speed steering stability decreases. The product A in excess of $3.0 \times 10^5$ dtex/50 mm increases the heat generation of the carcass layer 4, thus decreasing high-speed durability. In addition, since the interval between the carcass cords in the carcass layer 4 is narrowed, it is difficult to maintain durability also from this point. The individual ranges of the fineness based on corrected mass D and the count Ec described above are not particularly limited as long as the product A satisfies the range described above.

The carcass cord preferably has a thermal shrinkage rate ranging from 0.5% to 2.5% and more preferably from 1.0% to 2.0. Note that the "thermal shrinkage rate" is a dry thermal shrinkage rate (%) of sample cords measured in accordance with JIS L1017 "Test methods for chemical fiber tire cords" with a length of specimen being 500 mm and when heated at 150°C for 30 minutes. By using the carcass cord having such a thermal shrinkage rate, occurrence of kinking (twisting, folding, wrinkling, collapsing in shape, and the like) in the carcass cord (the organic fiber cord) during vulcanization and a decrease in durability or a decrease in uniformity can be suppressed. In this case, when the thermal shrinkage rate of the carcass cord is less than 0.5%, kinking tends to occur during vulcanization, and thus it is difficult to favorably maintain durability. When the thermal shrinkage rate of the carcass cord exceeds 2.5%, uniformity may deteriorate.

In addition, the carcass cord is configured such that a twist coefficient K represented by Formula (1) described below is preferably 2000 to 2500 and is more preferably 2100 to 2400. Note that the twist coefficient K is a value of the carcass cord after dip treatment. Using a cord having such a twist coefficient K achieves satisfactory cord fatigue and can ensure excellent durability. In this case, when the twist coefficient K of the carcass cord is less than 2000, the cord fatigue decreases, and thus it is difficult to ensure durability. When the twist coefficient K of the carcass cord exceeds 2500, productivity of the carcass cord deteriorates.

$$K = T \times D^{1/2} \qquad (1)$$

(In the formula, T is a cable twist count (unit: time/10 cm) of the carcass cord and D is a total fineness (unit: dtex) of the carcass cord.)

The type of organic fibers constituting the carcass cord (the organic fiber cord) is not especially limited. For example, polyester fibers, nylon fibers, or aromatic polyamide fibers (aramid fibers), or rayon can be used and, in particular, polyester fibers can be suitably used. Additionally, examples of the polyester fibers include polyethylene terephthalate fibers (PET fibers), polyethylene naphthalate fibers (PEN fibers), polybutylene terephthalate fibers (PBT), and polybutylene naphthalate fibers (PBN), with PET fibers being particularly suitable. Whichever fiber is used, the physical properties of the fiber advantageously provide high-speed durability and steering stability in a well-balanced and highly compatible manner. In particular, PET fibers, which are inexpensive, allow reduction in the cost of the pneumatic tire. In addition, workability in producing cords can be increased.

As the cover cords constituting the belt reinforcing layer 8, polyethylene terephthalate fiber cords (PET fiber cords) are used as described above, and the elongation under a load of 2.0 cN/dtex at 100°C ranges from 2.0% to 4.0% and preferably from 2.5% to 3.5%. Using the cover cord having the physical properties can effectively suppress the rising of the belt layer 7 during high-speed travel and is advantageous to improve high-speed durability. In addition, mid-range frequency road noise can be effectively reduced. When the elongation under a load of 2.0 cN/dtex at 100°C of the cover cord is less than 2.0%, the fatigue resistance of the cord decreases, and the durability of the tire possibly decreases. When the elongation under a load of 2.0 cN/dtex at 100°C of the cover cord is more than 4.0%, the rising of the belt layer 7 during high-speed travel cannot be sufficiently suppressed and high-speed durability cannot be sufficiently ensured. In addition, the effect of reducing mid-range frequency road noise described above cannot be sufficiently obtained.

Further, in the cover cord constituting the belt reinforcing layer 8, the in-tire cord tension is preferably 0.9 cN/dtex or more and more preferably ranging from 1.5 cN/dtex to 2.0 cN/dtex. Setting the in-tire cord tension in this way can reduce heat generation and improve tire durability. When the in-tire cord tension of the cover cord is less than 0.9 cN/dtex, a peak of tan$\delta$ rises, and the effect of improving the durability of the tire cannot be sufficiently obtained.

The cover cord preferably has a thermal shrinkage stress at 100°C of 0.6 cN/tex or more. By thus setting the thermal shrinkage stress at 100°C, road noise can be effectively reduced while the durability of the pneumatic tire is maintained satisfactorily. When the thermal shrinkage stress of the cover cord at 100°C is smaller than 0.6 cN/tex, the hoop effect during traveling cannot be sufficiently improved, and it is difficult to sufficiently maintain high-speed durability. An upper limit value of the thermal shrinkage stress of the cover cord at 100°C is not particularly limited, but is preferably, for example, 2.0 cN/tex. In an embodiment of the present invention, the thermal shrinkage stress (cN/tex) at 100°C is a thermal shrinkage stress of a sample cord (a cover cord) measured when heated under conditions of the sample length of 500 mm and the heating condition at 100°C for 5 minutes in accordance with JIS-L1017 "Test methods for chemical fiber tire cords".

To obtain the cover cord (the PET fiber cord) having the above-described physical properties, for example, it is preferable to properly perform dip treatment. In other words, dip treatment with adhesive is performed during manufacturing the PET fiber cords before a calendar process. However, in a normalizing process after a two-bath treatment, preferably, an atmosphere temperature is set within the range of 210°C to 250°C, and cord tension is set ranging from $2.2 \times 10^{-2}$ N/tex to $6.7 \times 10^{-2}$ N/tex. Accordingly, desired physical properties as described above can be imparted to the PET fiber cords. When the cord tension in the normalizing process is smaller than $2.2 \times 10^{-2}$ N/tex, cord elastic modulus is low, and thus the mid-range frequency road noise cannot be sufficiently reduced. In contrast, when the cord tension is greater than $6.7 \times 10^{-2}$ N/tex, cord elastic modulus is high, and thus fatigue resistance of the cords is low.

As the under tread rubber composition constituting the under tread layer 12, a rubber in which respective hardness at 20°C, tensile stress at 100% elongation at 100°C (M100), and a product (TB $\times$ EB) of a tensile strength TB (unit: MPa) at 100°C and an elongation at break EB (unit: %) at 100°C are set within specific ranges is used. Specifically, the hardness at 20°C ranges from 60 to 65 and preferably from 61 to 64. The tensile stress at 100% elongation at 100°C (M100) ranges from 2.0 MPa to 4.0 MPa and preferably from 2.2 MPa to 3.8 MPa. The product (TB $\times$ EB) of the tensile strength TB (unit: MPa) at 100°C and the elongation at break EB (unit: %) at 100°C is 2000 or more and preferably ranging from 2200 to 5500. Since the under tread rubber composition having such physical properties is used, high-speed durability and high-speed steering stability can be provided in a highly compatible manner in a well-balanced manner as described below.

Setting the hardness of the under tread rubber composition within the above-mentioned range is advantageous in providing steering stability and high-speed durability in a compatible manner. The hardness of the under tread rubber composition of less than 60 deteriorates the steering stability when the tire is made. When the hardness of the under tread rubber composition is more than 65, high-speed durability cannot be ensured.

Setting the tensile stress (M100) of the under tread rubber composition within the above-described range is advantageous in providing steering stability and high-speed durability in a highly compatible manner. The tensile stress (M100) of the under tread rubber composition of less than 2.0 MPa deteriorates the steering stability when the tire is made. The tensile stress (M100) of the under tread rubber composition exceeding 4.0 MPa cannot ensure high-speed durability.

High-speed durability can also be improved by setting the product (TB $\times$ EB) of the tensile strength TB and the elongation at break EB of the under tread rubber composition as described above. The product (TB $\times$ EB) of less than 2000 cannot sufficiently ensure high-speed durability. An individual value of the tensile strength TB or the elongation at break EB of the under tread rubber composition is not particularly limited, but the tensile strength TB of the under tread rubber composition can be set, for example, ranging from 8.0 MPa to 13.0 MPa, and the elongation at break EB of the under tread rubber can be set ranging from 200% to 400%. The tensile strength TB and the elongation at break EB of the under tread rubber composition in this paragraph refer to the tensile strength TB (unit: MPa) at 100°C and the elongation at break EB (unit: %) at 100°C in the same manner as described above.

In the under tread rubber composition, in addition to the physical properties described above, a loss tangent at 60°C (tanδ (60°C)) is preferably 0.07 or less and more preferably ranging from 0.02 to 0.06. Setting tan δ (60°C) in this manner advantageously improves the steering stability and the durability in tires while reducing the rolling resistance. The tan δ (60°C) exceeding 0.07 makes it difficult to sufficiently reduce the rolling resistance.

The under tread rubber composition having the above-mentioned physical properties can be obtained, for example, by setting the compound as follows. The above-described physical properties are not determined only by the following compound and can be adjusted also by, for example, kneading conditions and kneading methods.

In the under tread rubber composition described above (hereinafter referred to as the rubber composition according to an embodiment of the present invention in some cases), the rubber component is a diene-based rubber and preferably contains an isoprene-based rubber and a butadiene rubber. Examples of the isoprene-based rubber can include natural rubbers and isoprene rubbers (synthetic polyisoprene rubbers). As the isoprene-based rubber, natural rubber is preferably used alone, or natural rubber and isoprene rubber are preferably used in combination. The rubber composition according to an embodiment of the present invention may arbitrarily contain another diene-based rubber other than the isoprene-based rubber or the butadiene rubber. Examples of other diene-based rubbers include styrene-butadiene rubber and acrylonitrile-butadiene rubber. The diene-based rubbers can be used alone or as any given blend.

Blending the isoprene-based rubber can obtain sufficient rubber strength as a rubber composition for a tire. When the entire rubber component is 100 mass%, the blended amount of the isoprene-based rubber is preferably 60 mass% or more and more preferably ranging from 65 mass% to 85 mass%. The blended amount of the isoprene-based rubber means the blended amount of the natural rubber when the natural rubber is used alone or the total amount of the natural rubber and the isoprene rubber when the natural rubber and the isoprene rubber are used in combination. The blended amount of the isoprene-based rubber of less than 60 mass% cannot sufficiently ensure the rubber strength.

When the entire rubber component is 100 mass%, the blended amount of the butadiene rubber preferably ranges from 10 mass% to 40 mass% and more preferably from 15 mass% to 35 mass%. The blended amount of the butadiene rubber of less than 10 mass% increases viscosity and decreases extrudability. The blended amount of the butadiene rubber of more than 60 mass% decreases tackiness of an extrudate and deteriorates formability.

As the butadiene rubber, a butadiene rubber (hereinafter referred to as a specific BR) in which respective cis-1,4 bond content, Mooney viscosity ($ML_{1+4}$) at 100°C, and (T-cp)/($ML_{1+4}$), which is the ratio of 5 mass% toluene solution viscosity (T-cp) (unit: cps) at 25°C to the Mooney viscosity ($ML_{1+4}$) at 100°C satisfy specific ranges described later may be used. Using the specific BR is advantageous for ensuring the above-described physical properties.

The cis-1,4 bond content in the specific BR is preferably 97% or more and more preferably 98% or more. This can reduce heat generation. When the cis-1,4 bond content is less than 97%, the heat generation increases. The cis-1,4 bond content can be measured using a nuclear magnetic resonance apparatus (NMR).

The Mooney viscosity ($ML_{1+4}$) of the specific BR at 100°C is preferably 42 or more and more preferably 50 or more and 70 or less. This can provide hardness and fuel economy in a compatible manner. The Mooney viscosity ($ML_{1+4}$) at 100°C of less than 42 decreases strength at break. The Mooney viscosity can be measured using an L-type rotor in accordance with JIS 6300-1.

The (T-cp)/($ML_{1+4}$) of the specific BR preferably ranges from 2.0 to 3.0, more preferably from 2.2 to 2.5, and even more preferably from 2.3 to 2.5. The (T-cp)/($ML_{1+4}$) is an indicator of a degree of branching of a polymer chain of the BR, and the larger value means the smaller degree of branching, that is, high linearity. When this value is less than 2.0, none of low heat build-up, hardness, abrasion resistance, and setting resistance can be improved. The value exceeding 3.0 deteriorates the processability during extrusion. The toluene solution viscosity (T-cp) can be obtained by dissolving a sample rubber in toluene as a 5 mass% of a solution and measuring the viscosity of the solution at 25°C with a Cannon-Fenske kinematic viscometer.

Carbon black is blended to the above-described under tread rubber composition as a filler. Blending the carbon black can increase the strength of the rubber composition. In particular, the CTAB adsorption specific surface area of the carbon black is less than 70 m$^2$/g and preferably 30 m$^2$/g to 50 m$^2$/g. Using the carbon black having the large particle diameter in this manner can effectively increase rubber hardness while maintaining low heat build-up. If the CTAB adsorption specific surface area of the carbon black is 70 m$^2$/g or more, the heat build-up degrades. The CTAB adsorption specific surface area of the carbon black is measured in accordance with ISO 5794.

The blended amount of the carbon black preferably ranges from 35 parts by mass to 60 parts by mass, more preferably from 35 parts by mass to 55 parts by mass, and still more preferably from 35 parts by mass to 50 parts by mass per 100 parts by mass of the rubber component described above. The blended amount of the carbon black of less than 35 parts by mass degrades the hardness. The blended amount of the carbon black exceeding 60 parts by mass degrades the heat build-up.

Silica is blended as a filler in the above-described under tread rubber composition. Blending the silica in addition to the carbon black can increase the strength of the rubber composition while suppressing the heat build-up to a low level. In particular, the CTAB adsorption specific surface area of the silica is less than 180 m$^2$/g, preferably ranges from 90 m$^2$/g to 180 m$^2$/g, and more preferably from 160 m$^2$/g to 180 m$^2$/g. The use of silica having such a large particle diameter can effectively increase the rubber hardness while maintaining low heat build-up. The CTAB adsorption specific surface area of the silica of 180 m²/g or more degrades the heat build-up. The CTAB adsorption specific surface area of the silica is measured in accordance with ISO 5794.

The blended amount of the silica ranges from 3 parts by mass to 30 parts by mass, preferably from 4 parts by mass to 28 parts by mass, and more preferably from 4 parts by mass to 25 parts by mass per 100 parts by mass of the rubber component described above. The blended amount of the silica of less than 3 parts by mass causes the too small amount of silica, failing to expect the sufficient effect caused by the silica. The blended amount of the silica exceeding 30 parts by mass degrades the heat build-up.

When the carbon black and the silica are used in combination as described above, the total blended amount of the filler (the total amount of the carbon black and the silica) is preferably 75 parts by mass or less and more preferably ranges from 40 parts by mass to 60 parts by mass. Suppressing the total blended amount of the filler to a low level in this manner advantageously improves the heat build-up. The total blended amount of the filler exceeding 75 parts by mass may degrade the heat build-up. In addition, a mass ratio of the silica to the carbon black is preferably set ranging from 0.03 to 0.7 and more preferably from 0.08 to 0.6. Setting the mass ratio in this manner satisfactorily balances the carbon black and the silica, thus advantageously improving rubber hardness while maintaining low heat build-up. The mass ratio out of the range cannot obtain the effect of increasing the rubber hardness while maintaining the heat build-up low. In particular, the excessive mass ratio of the silica may deteriorate the heat build-up.

The rubber composition according to an embodiment of the present invention may contain other inorganic fillers other than carbon black or silica. Examples of other inorganic fillers include materials typically used for a rubber composition for tires, such as clay, talc, calcium carbonate, mica, and aluminum hydroxide.

A silane coupling agent may be used in combination when the silica described above is blended. Blending a silane coupling agent can improve dispersibility of the silica in the diene rubber. The type of silane coupling agent is not particularly limited as long as the silane coupling agent can be used in a silica-containing rubber composition. Examples of the silane coupling agent include sulfur-containing silane coupling agents, such as bis(3-triethoxysilylpropyl) tetrasulfide, bis(3-triethoxysilylpropyl) disulfide, 3-trimethoxysilylpropylbenzothiazole tetrasulfide, $\gamma$-mercaptopropyltriethoxysilane, and 3-octanoylthiopropyltriethoxysilane. The blended amount of the silane coupling agent is preferably 15 mass% or less and more preferably from 3 mass% to 12 mass% per weight of silica. When the blended amount of the silane coupling agent is greater than 15 mass% with respect to the blended amount of the silica, the silane coupling agent condenses, and desired hardness and strength of the rubber composition cannot be obtained.

An anti-aging agent, particularly an amine-based anti-aging agent is preferably further blended to the under tread rubber composition. The blended amount (the mass) of the anti-aging agent preferably ranges from 1.0 part by mass to 3.5 parts by mass and more preferably from 1.5 parts by mass to 3.0 parts by mass per 100 parts by mass of the rubber component. As a result, in addition to the above-described performances, it is possible to expect an effect of improving groove cracking resistance and water resistant adhesiveness to the belt layer. The blended amount of the anti-aging agent of less than 1.0 part by mass cannot expect the effect of improving cracking resistance and processability, reducing, in particular, cracking resistance. When the blended amount of the anti-aging agent is more than 3.5 parts by mass, the adhesiveness of the belt after change over time is deteriorated.

Examples of the amine-based anti-aging agent include N-phenyl N'-(1,3-dimethylbutyl)-p-phenylenediamine, alkylated diphenylamine, 4,4'-bis($\alpha,\alpha$-dimethylbenzyl)diphenylamine, N,N'-diphenyl-p-phenylenediamine, N-phenyl-N'-isopropyl-p-phenylenediamine, p-(p-toluenesulfonylamide)diphenylamine, N-phenyl-N'-(3-methacryloyloxy-2-hydroxypropyl)-p-phenylenediamine, and a 2,2,4-trimethyl-1,2-dihydroquinoline polymer, and in particular, N-phenyl N'-(1,3-dimethylbutyl)-p-phenylenediamine can be suitably used.

Sulfur is preferably further blended to the under tread rubber composition. As the blended amount, the sulfur is preferably blended ranging from 3.0 parts by mass to 6.0 parts by mass and more preferably from 3.5 parts by mass to 5.5 parts by mass per 100 parts by mass of the rubber component described above. The blended amount of sulfur is an amount of pure sulfur excluding an amount of oil. Blending sulfur in this manner can make rubber physical properties after vulcanization satisfactory. The blended amount of sulfur of less than 3.0 parts by mass possibly cannot obtain a desired hardness. The blended amount of sulfur of more than 6.0 parts by mass possibly degrade fatigue resistance.

In the under tread rubber composition, compounding agents other than those above can also be added. Examples of the other compounding agents can include various compounding agents generally used in pneumatic tires, such as vulcanization or crosslinking agents, vulcanization accelerators, anti-aging agents other than amine-based or amine-ketone-based anti-aging agent, liquid polymers, thermosetting resins, and thermoplastic resins. These compounding agents can be blended in typical amounts in the related art so long as the object of the present invention is not hindered. As a kneader, a typical kneader for a rubber, such as a Banbury mixer, a kneader, or a roller may be used.

The tire according to an embodiment of the present invention preferably includes circumferential grooves 40 extending along the tire circumferential direction in the tread portion 1. At this time, an under-groove gauge $G_T$ under the circumferential groove 40 formed in the tread portion 1 is preferably 3.0 mm or less, more preferably ranging from 1.5 mm to 2.5 mm, and still more preferably ranging from 1.5 mm to 2.0 mm. The ratio Gu/Gc preferably ranges from 0.3 to 0.8, more preferably from 0.4 to 0.7, and still more preferably from 0.5 to 0.7. Setting the rubber gauge in this manner satisfactorily balances the tread rubber layer 10, the cap tread layer 11, and the under tread layer 12 at the groove bottom position, thus advantageously improving steering stability and durability (in particular, durability against groove cracking) while reducing rolling resistance. $G_T$, $G_U$, and Gc are all thicknesses of respective rubber layers (respective rubbers) measured perpendicularly to a surface of the belt layer 7 on a tire outer circumferential side in a tire meridian cross-section. $G_T$ is the sum of Gu and Gc.

In the pneumatic tire according to an embodiment of the present invention, when road noise is reduced by using the PET fiber cord in the belt cover layer, high-speed steering stability, low rolling resistance, and high-speed durability can be improved by the cooperation of the physical properties of the respective members described above, and these performances can be provided in a highly compatible manner. To obtain the effects of an embodiment of the present invention, matters at least to be satisfied include the physical property of the cover cord (the elongation ratio under a load of 2.0 cN/dtex at 100°C), the physical properties of the under tread rubber composition (hardness at 20°C, tensile stress at 100% elongation at 100°C (M100), the product of the tensile strength TB (unit: Mpa) at 100°C and the elongation at break EB (unit: %) at 100°C (TB $\times$ EB)), and the compound of the under tread rubber composition (the blended amount of the carbon black and the CTAB adsorption specific surface area, the blended amount of the silica and the CTAB adsorption specific surface area) should be satisfied at least. Therefore, various physical properties and blends other than these can be combined appropriately for use.

The present invention will further be described below by way of Examples, but the scope of the present invention is not limited to the Examples.

Examples

Tires of Standard Example 1, Comparative Examples 1 to 8, and Examples 1 to 9 having a tire size of 245/40R18 and a basic structure illustrated in FIG. 1 in which the under tread layer (the blend and the physical properties of the under tread rubber composition) and the belt reinforcing layer (the material of the cover cord, the fineness, the elongation ratio under a load of 2.0 cN/dtex at 100°C ("Intermediate elongation" in the table), and in-tire cord tension) were set as shown in Tables 1 to 3 were manufactured.

In each example, as shown in Tables 1 to 3, the hardness, the tensile stress at 100% elongation at 100°C (hereinafter, "M100"), the tensile strength TB at 100°C (hereinafter, "TB"), the elongation at break EB at 100°C (hereinafter, "EB"), and the product TB $\times$ EB were set as the physical properties of the under tread rubber composition. The "hardness" was measured at a temperature of 20°C using a type A durometer in accordance with JIS K6253. The "M100" was measured under conditions of a tensile speed of 500 mm/minute and a temperature of 100°C using a No. 3 dumbbell test piece in accordance with JIS K6251 (unit: MPa). The "TB" was measured under a condition of a temperature of 100°C in accordance with JIS K6251 (unit: MPa). The "EB" was measured at a condition of a temperature of 100°C in accordance with JIS K6251 (unit: %).

In Tables 1 to 3, the case where the organic fiber cord constituting the cover cord is made of polyethylene terephthalate is indicated as "PET", and the case where the organic fiber cord is made of nylon 66 is indicated as "N66". In any example, the belt reinforcing layer has a jointless structure in which a strip made of at least one cover cord (a nylon fiber cord or a PET fiber cord) covered with coating rubber is wound spirally in the tire circumferential direction. The cord density in the strip is 50 cords/50 mm.

In each example, "the elongation ratio under a load of 2.0 cN/dtex at 100°C" of the cover cord (the organic fiber cord) was measured in accordance with JIS L1017 "Test methods for chemical fiber tire cords" and under conditions of a grip interval of 250 mm and a tensile speed of 300 $\pm$ 20 mm/minute (unit: %). The "in-tire cord tension" was obtained by exposing the belt reinforcing layer from the tire, peeling off the cover cord by a predetermined length range of the belt reinforcing layer, measuring the length after the collection, obtaining an amount of shrinkage to the length before the collection (an average value of five fiber cords located at a center portion of the belt layer on an outermost circumferential side), obtaining a load corresponding to the amount of shrinkage (%) from an S-S curve, and performing conversion into a value per dtex.

These test tires were evaluated for high-speed steering stability, road noise, low rolling resistance, high-speed durability, and belt edge separation durability by the following evaluation methods, and the results are also shown in Tables 1 and 2.

Steering Stability

Each of the test tires was assembled on a wheel having a rim size of 18 $\times$ 7J, inflated to an air pressure of 230 kPa, and mounted on a test vehicle (a front wheel drive vehicle) having an engine displacement of 2.5 L. Sensory evaluations for steering stability were performed on a test course of dry road surfaces by a test driver with two occupants riding in the vehicle. The evaluation results mean evaluation using a 5-point method with Standard Example 1 being defined as "3 (criterion)". The larger the score is, the superior the steering stability is.

Road Noise

Each test tire was assembled on a wheel having a rim size of 18 × 7J, mounted on a test car (a front wheel drive vehicle) having an air pressure of 230 kPa and an engine displacement of 2.5 L, and traveled on a road surface for road noise measurement by a trained driver under a condition of a speed of 50 km/h with a sound collecting microphone installed in a window on the driver seat side in a vehicle compartment. The collected road noise was frequency-analyzed, and a noise level (unit: db) of the 315 Hz was evaluated as a representative value of the mid-range frequency road noise. The evaluation results are indicated by the amount of change (unit: db) with respect to the measured value of Standard Example 1. When the noise level is decreased, it is indicated by a negative value.

Low Rolling Resistance

Each of the test tires was assembled on a wheel of 18 × 7J, and the rolling resistance was measured under the conditions of an air pressure of 210 kPa, a load of 4.82 kN, and a speed of 80 km/h in accordance with ISO28580 using an indoor drum testing machine (a drum diameter: 1707 mm). The evaluation results are expressed as index values with respect to the measurement value of Standard Example 1 assigned 100. Smaller index values mean lower rolling resistance and superior low rolling resistance.

High-speed Durability

Each of the test tires was assembled on a wheel having a rim size of 18 × 7J, inflated with a test internal pressure of 230 kPa, and subjected to a high-speed durability test specified in JIS D4230 mounted on an indoor drum testing machine (a drum diameter: 1707 mm). Thereafter, subsequently, the speed was increased by 8 km/h every hour, and the travel distance until failure occurred in the tire was measured. Evaluation results are indicated as index values with Standard Example 1 being assigned an index value of 100. Larger index values indicate larger travel distance until failure occurs and superior high-speed durability.

Belt Edge Separation Durability

Each of the test tires was assembled on a wheel having a rim size of 18 × 7J, sealed with oxygen to an internal pressure of 350 kPa, and stored for 5 days under a condition of a temperature of 80°C. Each of the pre-treated test tires in this manner was mounted on an indoor drum testing machine (a drum diameter: 1707 mm), an ambient temperature was controlled to 38 ± 3°C, and the load was set to 88% of the JATMA maximum load. The travel speed was accelerated from 120 km/h in increments of 10 km/h every 24 hours, and the travel speed until failure occurred in the tire (belt edge separation) was measured. The evaluation results are indicated as index values using measurement values of the travel distance, with Conventional Example being assigned an index value of 100. Larger index values mean longer travel distance until failure occurs and superior belt edge separation durability.

[Table 1]

| | | | Standard Example 1 | Comparative Example 1 | Comparative Example 2 | Comparative Example 3 | Example 1 | Example 2 |
|---|---|---|---|---|---|---|---|---|
| Under tread layer | Blend | NR | Parts by mass | 70 | 70 | 70 | 70 | 70 | 70 |
| | | BR1 | Parts by mass | 30 | 30 | 30 | 30 | 30 | 30 |
| | | BR2 | Parts by mass | | | | | | |
| | | BR3 | Parts by mass | | | | | | |
| | | BR4 | Parts by mass | | | | | | |
| | | BR5 | Parts by mass | | | | | | |
| | | CB1 | Parts by mass | | | | | | |
| | | CB2 | Parts by mass | 40 | 40 | 40 | 40 | 40 | 40 |
| | | Silica 1 | Parts by mass | | | | | 10 | 15 |
| | | Silica 2 | Parts by mass | | | | | | |
| | | Silane coupling agent | Parts by mass | | | | | 0.1 | 0.1 |
| | | Tackifier | Parts by mass | 2 | 2 | 2 | 2 | 2 | 2 |
| | | Zinc oxide | Parts by mass | 4 | 4 | 4 | 4 | 4 | 4 |
| | | Anti-aging agent | Parts by mass | 1.8 | 1.8 | 1.8 | 1.8 | 1.8 | 1.8 |

| | | | | Standard Example 1 | Comparative Example 1 | Comparative Example 2 | Comparative Example 3 | Example 1 | Example 2 |
|---|---|---|---|---|---|---|---|---|---|
| | | Stearic acid | Parts by mass | 1.5 | 1.5 | 1.5 | 1.5 | 1.5 | 1.5 |
| | | Sulfur | Parts by mass | 3.0 | 3.0 | 3.0 | 3.0 | 5.0 | 5.5 |
| | | Vulcanization accelerator | Parts by mass | 1.0 | 1.0 | 1.0 | 1.0 | 1.5 | 1.5 |
| | Physical properties | Hardness | | 52 | 52 | 52 | 52 | 62 | 63 |
| | | M100 | MPa | 1.8 | 1.8 | 1.8 | 1.8 | 2.5 | 2.8 |
| | | TB | MPa | 11.0 | 11.0 | 11.0 | 11.0 | 10.5 | 10.2 |
| | | EB | % | 550 | 550 | 550 | 550 | 290 | 270 |
| | | TB × EB | | 6050 | 6050 | 6050 | 6050 | 3045 | 2754 |
| Belt reinforcing layer | Cord material | | | N66 | PET | PET | PET | PET | PET |
| | Fineness | | dtex/2 | 940 | 1100 | 1100 | 1100 | 1100 | 1100 |
| | Intermediate elongation | | % | 7.5 | 1.7 | 4.3 | 3.0 | 3.0 | 3.0 |
| | Cord tension | | cN/dtex | 0.8 | 0.8 | 0.8 | 0.8 | 0.8 | 0.8 |
| Evaluation | Steering stability | | | 3 | 3 | 3 | 3 | 4 | 4 |
| | Road noise | | db | ±0 | -3.0 | -1.0 | -2.5 | -2.4 | -2.6 |
| | Low rolling resistance | | Index value | 100 | 102 | 102 | 102 | 98 | 97 |
| | High-speed durability | | Index value | 100 | 85 | 90 | 103 | 105 | 108 |
| | Belt edge separation durability | | Index value | 100 | 80 | 82 | 82 | 105 | 106 |

Table 2

| | | | | Comparative Example 4 | Comparative Example 5 | Comparative Example 6 | Comparative Example 7 | Comparative Example 8 |
|---|---|---|---|---|---|---|---|---|
| Under tread layer | Blend | NR | Parts by mass | 70 | 70 | 70 | 70 | 70 |
| | | BR1 | Parts by mass | 30 | 30 | 30 | 30 | 30 |
| | | BR2 | Parts by mass | | | | | |
| | | BR3 | Parts by mass | | | | | |
| | | BR4 | Parts by mass | | | | | |
| | | BR5 | Parts by mass | | | | | |
| | | CB1 | Parts by mass | | | | | 40 |
| | | CB2 | Parts by mass | 40 | 30 | 65 | 65 | |
| | | Silica 1 | Parts by mass | | 10 | 10 | 10 | 10 |
| | | Silica 2 | Parts by mass | 10 | | | | |
| | | Silane coupling agent | Parts by mass | 0.1 | 0.1 | 0.1 | 0.1 | 0.1 |
| | | Tackifier | Parts by mass | 2 | 2 | 2 | 2 | 2 |
| | | Zinc oxide | Parts by mass | 4 | 4 | 4 | 4 | 4 |
| | | Anti-aging agent | Parts by mass | 1.8 | 1.8 | 1.8 | 1.8 | 1.8 |

(continued)

| | | | Comparative Example 4 | Comparative Example 5 | Comparative Example 6 | Comparative Example 7 | Comparative Example 8 |
|---|---|---|---|---|---|---|---|
| | Stearic acid | Parts by mass | 1.5 | 1.5 | 1.5 | 1.5 | 1.5 |
| | Sulfur | Parts by mass | 5.0 | 5.0 | 5.0 | 6.5 | 5.0 |
| | Vulcanization accelerator | Parts by mass | 1.5 | 1.5 | 1.5 | 1.5 | 1.5 |
| | Hardness | | 63 | 57 | 68 | 72 | 64 |
| Physical properties | M100 | MPa | 2.5 | 2.3 | 4.2 | 5.1 | 2.7 |
| | TB | MPa | 10.5 | 9.8 | 11.8 | 10.0 | 12.0 |
| | EB | % | 290 | 450 | 265 | 190 | 260 |
| | TB × EB | | 3045 | 4410 | 3127 | 1900 | 3120 |
| Belt reinforcing layer | Cord material | | PET | PET | PET | PET | PET |
| | Fineness | dtex/2 | 1100 | 1100 | 1100 | 1100 | 1100 |
| | Intermediate elongation | % | 3.0 | 3.0 | 3.0 | 3.0 | 3.0 |
| | Cord tension | cN/dtex | 0.8 | 0.8 | 0.8 | 0.8 | 0.8 |
| Evaluation | Steering stability | | 4 | 2 | 4 | 5 | 5 |
| | Road noise | db | -2.4 | -2.0 | -2.0 | -2.0 | -2.8 |
| | Low rolling resistance | Index value | 102 | 97 | 105 | 104 | 102 |
| | High-speed durability | Index value | 103 | 101 | 94 | 85 | 100 |
| | Belt edge separation durability | Index value | 102 | 102 | 90 | 87 | 100 |

Table 3

| Blend | | | | Example 3 | Example 4 | Example 5 | Example 6 | Example 7 | Example 8 | Example 9 |
|---|---|---|---|---|---|---|---|---|---|---|
| Under tread layer | NR | Parts by mass | | 70 | 70 | 70 | 70 | 70 | 70 | 70 |
| | BR1 | Parts by mass | | | | | | 30 | 30 | 30 |
| | BR2 | Parts by mass | | 30 | | | | | | |
| | BR3 | Parts by mass | | | 30 | | | | | |
| | BR4 | Parts by mass | | | | | 30 | | | |
| | BR5 | Parts by mass | | | | 30 | | | | |
| | CB1 | Parts by mass | | | | | | | | |
| | CB2 | Parts by mass | | 40 | 40 | 40 | 40 | 40 | 40 | 40 |
| | Silica 1 | Parts by mass | | 10 | 10 | 10 | 10 | 10 | 10 | 10 |
| | Silica 2 | Parts by mass | | | | | | | | |
| | Silane coupling agent | Parts by mass | | 0.1 | 0.1 | 0.1 | 0.1 | 0.1 | 0.1 | 0.1 |
| | Tackifier | Parts by mass | | 2 | 2 | 2 | 2 | 2 | 2 | 2 |
| | Zinc oxide | Parts by mass | | 4 | 4 | 4 | 4 | 4 | 4 | 4 |
| | Anti-aging agent | Parts by mass | | 1.8 | 1.8 | 1.8 | 1.8 | 1.8 | 1.8 | 1.8 |

(continued)

| | | | | Example 3 | Example 4 | Example 5 | Example 6 | Example 7 | Example 8 | Example 9 |
|---|---|---|---|---|---|---|---|---|---|---|
| | | Stearic acid | Parts by mass | 1.5 | 1.5 | 1.5 | 1.5 | 1.5 | 1.5 | 1.5 |
| | | Sulfur | Parts by mass | 5.0 | 5.0 | 5.0 | 5.0 | 5.0 | 5.0 | 5.0 |
| | | Vulcanization accelerator | Parts by mass | 1.5 | 1.5 | 1.5 | 1.5 | 1.5 | 1.5 | 1.5 |
| | Physical properties | Hardness | | 61 | 62 | 62 | 62 | 62 | 62 | 62 |
| | | M100 | MPa | 2.6 | 2.5 | 2.5 | 2.5 | 2.5 | 2.5 | 2.5 |
| | | TB | MPa | 9.8 | 10.0 | 11.0 | 12.1 | 10.5 | 10.5 | 10.5 |
| | | EB | % | 270 | 300 | 295 | 315 | 290 | 290 | 290 |
| | | TB × EB | | 2646 | 3000 | 3245 | 3812 | 3045 | 3045 | 3045 |
| Belt reinforcing layer | | Cord material | | PET | PET | PET | PET | PET | PET | PET |
| | | Fineness | dtex/2 | 1100 | 1100 | 1100 | 1100 | 1100 | 1100 | 1100 |
| | | Intermediate elongation | % | 3.0 | 3.0 | 3.0 | 3.0 | 2.0 | 4.0 | 3.0 |
| | | Cord tension | cN/dtex | 0.8 | 0.8 | 0.8 | 0.8 | 0.8 | 0.8 | 1.0 |
| Evaluation | | Steering stability | | 4 | 4 | 4 | 5 | 4 | 4 | 4 |
| | | Road noise | db | -2.2 | -2.3 | -2.4 | -2.4 | -1.9 | -1.7 | -2.4 |
| | | Low rolling resistance | Index value | 95 | 98 | 96 | 96 | 99 | 98 | 98 |
| | | High-speed durability | Index value | 105 | 109 | 106 | 112 | 106 | 106 | 115 |
| | | Belt edge separation durability | Index value | 104 | 106 | 109 | 111 | 107 | 108 | 112 |

Types of raw materials used as indicated in Tables 1 to 3 are described below.

- NR: natural rubber, TSR20
- BR1: butadiene rubber, Nipol BR 1220 (cis-1,4 bond content: 98%, Mooney viscosity $ML_{1+4}$ at 100°C: 43, 5 mass% toluene solution viscosity Tcp at 25°C: 60.2 cps, ratio $Tcp/ML_{1+4}$: 1.4) available from Zeon Corporation
- BR2: terminal modified butadiene rubber, Nipol BR 1250 H (cis-1,4 bond content: 35%, Mooney viscosity $ML_{1+4}$ at 100°C: 59) available from Zeon Corporation
- BR3: butadiene rubber, UBEPOL BR 230 (cis-1,4 bond content: 98%, Mooney viscosity $ML_{1+4}$ at 100°C: 38, 5 mass% toluene solution viscosity Tcp at 25°C: 117.8 cps, ratio $Tcp/ML_{1+4}$: 3.1) available from Ube Industries, Ltd.
- BR4: butadiene rubber, UBEPOL BR 150L (cis-1,4 bond content: 98%, Mooney viscosity $ML_{1+4}$ at 100°C: 43, 5 mass% toluene solution viscosity Tcp at 25°C: 120.4 cps, ratio $Tcp/ML_{1+4}$: 2.8) available from Ube Industries, Ltd.
- BR5: butadiene rubber, UBEPOL BR 360L (cis-1,4 bond content: 98%, Mooney viscosity $ML_{1+4}$ at 100°C: 47, 5 mass% toluene solution viscosity Tcp at 25°C: 131.6 cps, ratio $Tcp/ML_{1+4}$: 2.8) available from Ube Industries, Ltd.
- IR: isoprene rubber, Nipol IR2200, available from Zeon Corporation
- CB1: carbon black, SEAST 3 (CTAB adsorption specific surface area: 82 $m^2/g$), available from Tokai Carbon Co., Ltd.
- CB2: carbon black, SEAST F (CTAB adsorption specific surface area: 47 $m^2/g$), available from Tokai Carbon Co., Ltd.
- Silica 1: Ultrasil VN3 (CTAB adsorption specific surface area: 175 $m^2/g$) available from Evonick Japan Co., Ltd.
- Silica 2: ZEOSIL Premium 200MP (CTAB adsorption specific surface area: 200 $m^2/g$), available from Solvay Japan, Ltd.
- Silane coupling agent: Si69, available from Evonick Japan Co., Ltd.
- Tackifier: Hitanol 1502 Z available from Hitachi Chemical Company, Ltd.
- Zinc oxide: Zinc Oxide III, available from Seido Chemical Industry Co., Ltd.
- Anti-aging agent: amine-based anti-aging agent, Santflex 6PPD, available from Flexsys
- Stearic acid: Stearic acid 50S, available from New Japan Chemical Co., Ltd.
- Sulfur: insoluble sulfur, MUCRON OT-20 (sulfur content: 80 mass%), available from Shikoku Chemicals Corporation
- Vulcanization accelerator: NS-G, available from Sanshin Chemical Industry Co., Ltd.

As can be seen from Tables 1 to 3, the tires of Examples 1 to 9 improved in high-speed steering stability, low rolling resistance, high-speed durability, and belt edge separation durability while reducing road noise in contrast to Standard Example 1, and these performances were provided in a highly compatible manner. On the other hand, in Comparative Example 1, the tensile stress at 100% elongation at 100°C (M100) of the under tread rubber composition was small, and the elongation ratio under a load of 2.0 cN/dtex at 100°C of the cover cord constituting the belt reinforcing layer was small. Therefore, the high-speed steering stability failed to be improved and the low rolling resistance, the high-speed durability, and the belt edge separation durability were deteriorated. In Comparative Example 2, the tensile stress at 100% elongation at 100°C (M100) of the under tread rubber composition was small, and the elongation ratio under a load of 2.0 cN/dtex at 100°C of the cover cord constituting the belt reinforcing layer was large. Therefore, the high-speed steering stability failed to be improved and the low rolling resistance, the high-speed durability, and the belt edge separation durability were deteriorated. In Comparative Example 3, the tensile stress at 100% elongation at 100°C (M100) of the under tread rubber composition was small, and therefore the high-speed steering stability failed to be improved, and the low-rolling resistance and the belt edge separation durability were deteriorated. Comparative Example 4 had a large CTAB adsorption specific surface area of the silica contained in the under tread rubber composition, and therefore the rolling resistance failed to be reduced. In Comparative Example 5, the blended amount of the carbon black contained in the under tread rubber composition was small, and the hardness of the under tread rubber composition was small and therefore the high-speed steering stability decreased. In Comparative Example 6, the blended amount of the carbon black contained in the under tread rubber composition was large, and the hardness and the tensile stress at 100% elongation at 100°C (M100) of the under tread rubber composition were large. Therefore, the rolling resistance failed to be reduced, and the high-speed durability and the belt edge separation durability decreased. In Comparative Example 7, the blended amount of carbon black contained in the under tread rubber composition was large, the hardness and the tensile stress at 100% elongation at 100°C (M100) of the under tread rubber composition were large, and the product TB × EB was small. Therefore, the rolling resistance failed to be reduced, and the high-speed durability and the belt edge separation durability decreased. Comparative Example 8 had a large CTAB adsorption specific surface area of the carbon black contained in the under tread rubber composition, and therefore the rolling resistance was deteriorated, and the effect of improving the high-speed durability and the belt edge separation durability was not obtained.

Reference Signs List

1 Tread portion
2 Sidewall portion
3 Bead portion
4 Carcass layer
5 Bead core
6 Bead filler
7 Belt layer
8 Belt reinforcing layer
10 Tread rubber layer
11 Cap tread layer
12 Under tread layer
20 Side rubber layer
30 Rim cushion rubber layer
40 Circumferential narrow groove
CL Tire equator

**Claims**

1. A pneumatic tire, comprising:

   a tread portion extending in a tire circumferential direction and having an annular shape;
   a pair of sidewall portions respectively disposed on both sides of the tread portion;
   a pair of bead portions each disposed on an inner side of the pair of sidewall portions in a tire radial direction, one carcass layer mounted between the pair of bead portions;
   a plurality of belt layers disposed on an outer circumferential side of the carcass layer in the tread portion; and
   a belt reinforcing layer disposed on an outer circumferential side of the belt layer;
   the tread portion being made up of two layers, an under tread layer disposed on an outer circumferential side of the belt reinforcing layer and a cap tread layer disposed on an outer circumferential side of the under tread layer and constituting a road contact surface of the tread portion;
   a cover cord constituting the belt reinforcing layer being made of a polyethylene terephthalate fiber cord having an elongation ratio under a load of 2.0 cN/dtex at 100°C ranging from 2.0% to 4.0%,
   an under tread rubber composition constituting the under tread layer having a hardness at 20°C ranging from 60 to 65, a tensile stress at 100% elongation at 100°C (M100) ranging from 2.0 MPa to 4.0 MPa, and a product (TB × EB) of a tensile strength TB (unit: MPa) at 100°C and an elongation at break EB (unit: %) at 100°C of 2000 or more, and
   the under tread rubber composition blending, per 100 parts by mass of rubber component, 35 parts by mass to 60 parts by mass of carbon black having a CTAB adsorption specific surface area of less than 70 $m^2$/g and 3 parts by mass to 30 parts by mass of silica having the CTAB adsorption specific surface area of less than 180 $m^2$/g.

2. The pneumatic tire according to claim 1, wherein

   the rubber component contains 60 mass% or more of isoprene-based rubber and 10 mass% to 40 mass% of butadiene rubber, and
   the butadiene rubber has 97% or more of cis-1,4 bond content, 42 or more of Mooney viscosity ($ML_{1+4}$) at 100°C, and (T-cp)/($ML_{1+4}$), which is a ratio of 5 mass% toluene solution viscosity (T-cp) (unit: cps) at 25°C to the Mooney viscosity, ranging from 2.0 to 3.0.

3. The pneumatic tire according to claim 1 or 2, wherein a cord tension of the cover cord in the tire is 0.9 cN/dtex or more.

4. The pneumatic tire according to any one of claims 1 to 3, wherein

   a carcass cord constituting the carcass layer is made of an organic fiber cord having, on an inner circumferential side of the belt layer, an elongation ratio under a load of 1.5 cN/dtex ranging from 5.5% to 8.5% and an elongation at break ranging from 20% to 30%, and
   a product A = D × Ec of a fineness based on corrected mass D per carcass cord (unit: dtex/cord) and an insertion count Ec (unit: cord count/50 mm) of the carcass cord per 50 mm in a direction orthogonal to an extension direction of the carcass cord satisfies a relationship $1.8 \times 10^5$ dtex/50 mm to $3.0 \times 10^5$ dtex/50 mm.

FIG. 1

EP 4 450 300 A1

| | | |
|---|---|---|
| **INTERNATIONAL SEARCH REPORT** | | International application No. |
| | | **PCT/JP2022/045422** |

**A.    CLASSIFICATION OF SUBJECT MATTER**

**B60C 11/00**(2006.01)i; **B60C 1/00**(2006.01)i; **B60C 9/00**(2006.01)i; **B60C 9/08**(2006.01)i; **B60C 9/22**(2006.01)i; **C08K 3/04**(2006.01)i; **C08K 3/36**(2006.01)i; **C08L 7/00**(2006.01)i; **C08L 9/00**(2006.01)i; **C08L 21/00**(2006.01)i
FI:    B60C11/00 D; B60C1/00 A; B60C9/00 B; B60C9/08 Z; B60C9/22 C; B60C9/22 D; B60C11/00 B; C08K3/04; C08K3/36; C08L7/00; C08L9/00; C08L21/00

According to International Patent Classification (IPC) or to both national classification and IPC

**B.    FIELDS SEARCHED**

Minimum documentation searched (classification system followed by classification symbols)

B60C11/00; B60C1/00; B60C9/00; B60C9/08; B60C9/22; C08K3/04; C08K3/36; C08L7/00; C08L9/00; C08L21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-181530 A (THE YOKOHAMA RUBBER CO., LTD.) 25 November 2021 (2021-11-25)<br>claims, examples | 1-4 |
| A | JP 2020-147166 A (THE YOKOHAMA RUBBER CO., LTD.) 17 September 2020 (2020-09-17)<br>claims, examples | 1-4 |
| A | JP 2021-167141 A (THE YOKOHAMA RUBBER CO., LTD.) 21 October 2021 (2021-10-21)<br>claims, examples | 1-4 |
| A | JP 2021-165088 A (THE YOKOHAMA RUBBER CO., LTD.) 14 October 2021 (2021-10-14)<br>claims, examples | 1-4 |
| A | JP 2020-142702 A (THE YOKOHAMA RUBBER CO., LTD.) 10 September 2020 (2020-09-10)<br>claims, examples | 1-4 |

☑ Further documents are listed in the continuation of Box C.      ☑ See patent family annex.

| | | |
|---|---|---|
| *    Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
|---|---|
| **13 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 450 300 A1

**INTERNATIONAL SEARCH REPORT**

International application No.

**PCT/JP2022/045422**

## C. DOCUMENTS CONSIDERED TO BE RELEVANT

| Category* | Citation of document, with indication, where appropriate, of the relevant passages | Relevant to claim No. |
|---|---|---|
| A | JP 2017-226317 A (THE YOKOHAMA RUBBER CO., LTD.) 28 December 2017 (2017-12-28)<br>claims, examples | 1-4 |
| A | JP 2021-24509 A (THE YOKOHAMA RUBBER CO., LTD.) 22 February 2021 (2021-02-22)<br>claims, examples | 1-4 |
| A | JP 2006-159984 A (THE YOKOHAMA RUBBER CO., LTD.) 22 June 2006 (2006-06-22)<br>claims, examples | 1-4 |

Form PCT/ISA/210 (second sheet) (January 2015)

22

**INTERNATIONAL SEARCH REPORT**
Information on patent family members

International application No.

**PCT/JP2022/045422**

| Patent document cited in search report | | | Publication date (day/month/year) | Patent family member(s) | | | Publication date (day/month/year) |
|---|---|---|---|---|---|---|---|
| JP | 2021-181530 | A | 25 November 2021 | (Family: none) | | | |
| JP | 2020-147166 | A | 17 September 2020 | CN | 111688414 | A | |
| JP | 2021-167141 | A | 21 October 2021 | (Family: none) | | | |
| JP | 2021-165088 | A | 14 October 2021 | WO | 2021/206016 | A1 | |
| | | | | CN | 115362071 | A | |
| JP | 2020-142702 | A | 10 September 2020 | US | 2022/0134803 | A1 | |
| | | | | claims, examples | | | |
| | | | | WO | 2020/179921 | A1 | |
| | | | | DE | 112020000711 | T | |
| | | | | CN | 113474183 | A | |
| JP | 2017-226317 | A | 28 December 2017 | (Family: none) | | | |
| JP | 2021-24509 | A | 22 February 2021 | (Family: none) | | | |
| JP | 2006-159984 | A | 22 June 2006 | (Family: none) | | | |

Form PCT/ISA/210 (patent family annex) (January 2015)

**EP 4 450 300 A1**

**Patent documents cited in the description**

- JP 2001063312 A